# EUROPEAN PATENT SPECIFICATION

(11) **EP 3 092 508 B1**
(45) Date of publication and mention of the grant of the patent: **31.01.2018**
(21) Application number: 14838802.8
(22) Date of filing: 24.11.2014
(51) Int. Cl.: G01S 13/42, G01S 13/00, H01Q 3/24, H01Q 21/20

(54) **BISTATIC RADAR**
BISTATISCHER RADAR
RADAR BISTATIQUE

(30) Priority: 09.01.2014 IT RM20140005
(43) Date of publication of application: 16.11.2016
(73) Proprietor: Fincantieri S.p.A., 34121 Trieste (IT)
(72) Inventor: MADIA, Francesco, I-34121 Trieste (IT); MAESTRINI, Alberto, I-34121 Trieste (IT)
(74) Representative: Carangelo, Pierluigi
(86) International application number: PCT/IT2014/000310
(87) International publication number: WO 2015/104728

(56) References cited:
- EP-A1- 1 814 197
- WO-A1-2009/058651
- DE-A1-102005 029 090
- JP-A- H06 249 945
- JP-A- 2000 171 544
- US-A- 3 697 994
- US-A1- 2010 066 590

## Description

The present description relates to the technical field of radar systems and relates in particular to a bistatic radar.

It is known of to equip land vehicles or ships, for example military ships, with radar systems which allow monitoring of the surrounding space to identify possible threats.

These radar systems have undergone a long evolution over time. Radar systems were initially developed to obtain a 360° scan of the radar beam in azimuth plane, comprising a voluminous reflector antenna, typically installed on a rotating platform provided on the vehicle. The aforementioned radar systems have subsequently evolved over time up to the most modern radar systems which do not provide for rotating platforms and which, to obtain as broad a visibility on the azimuth plane as possible exploit a plurality of active planar phased array antennas. For example, radar systems are known which have four active planar phased array antennas, each installed on a face of a ship mast substantially shaped as a truncated pyramid with a quadrangular base.

The active radar of the phased array type, thanks to the ability to change the direction of the beam quickly and in a controlled manner, enables a vehicle such as a military ship to use a single radar system for the detection and monitoring of surfaces (for example to identify ships), monitoring of airspace (to detect aircraft and missiles), guidance of missiles and control of artillery devices.

The active planar phased array radars of the art so far installed in vehicles such as military ships are typically monostatic radars, as each antenna array is composed of a plurality of both receiver and transmitter (TX/RX modules) modules, each of which is switched sequentially in time between the two operating modes, respectively transmitting and receiving. For this reason, the above phased array radar systems of the prior art are particularly expensive. It has also been observed that, in the configuration in which four active planar phased array antennas are provided for, each installed on a face of a ship mast substantially shaped as a truncated pyramid with a quadrangular base, such radar systems do not show uniform performance over the entire azimuth plane, in that such performance is degraded in particular in the directions placed frontally to the edges of the truncated pyramid. In other words, the aforesaid radar of the prior art show scanning losses in the horizontal plane.

A known radar having a conical geometric shape is described in the document JP H06249945 A. This document discloses a non-bistatic radar, i.e. a radar with TX/RX modules, in which analog phase shifters are present in the reception chain for the pointing of the reception beams. For this reason such radar on the receiving side does neither adopt a full digital beam forming block nor a digital beamforming. The antenna is further divided into horizontal truncated-cone sections each of which works at a respective frequency. Such radar has the serious drawback of not allowing the formation of multiple independent beams and does not allow control of the amplitude on the surface of the truncated cone thus producing beams with high side lobes.

A general purpose of the present description is to make available a radar which does not have the drawbacks mentioned above with reference to the prior art.

This and other purposes are achieved by means of a bistatic radar as defined in the first claim in its most general form, and in the dependent claims in some of its particular embodiments.

The invention will be clearer to understand from the following detailed description of its embodiments, made by way of a non-limiting example with reference to the appended drawings, wherein:
- Figure 1 shows a functional block diagram of an embodiment of a bistatic radar comprising a transmitting antenna and a receiving antenna;
- Figure 2 shows a schematic view in side elevation of an embodiment of a transmitting antenna and a receiving antenna in which the two antennas are shown in a configuration of mechanical coupling with each other;
- Figure 3 shows a schematic plan view of the transmitting antenna and the receiving antenna in which the two antennas are shown in a configuration of mechanical coupling with each other;

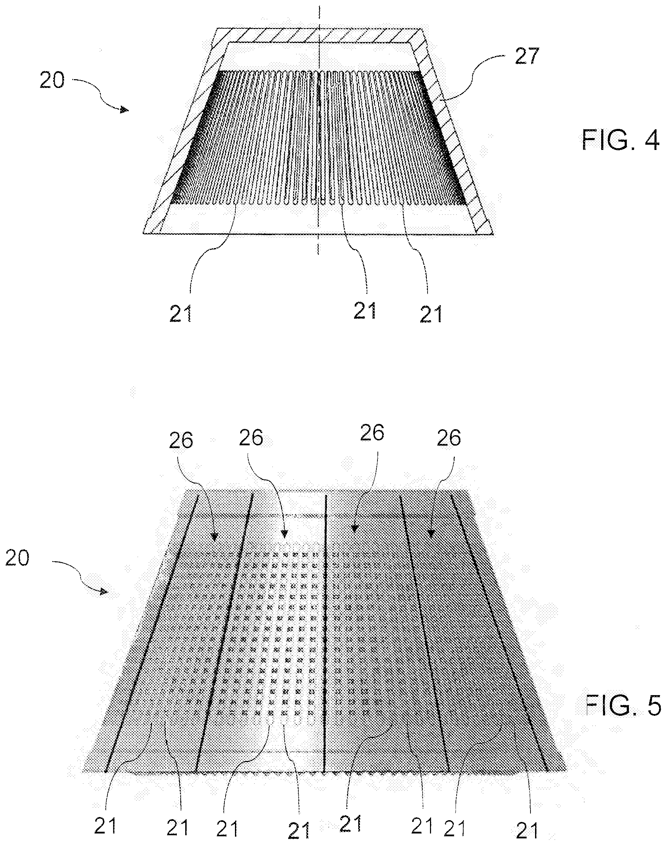

- Figure 4 shows a schematic view in lateral cross-section of the transmitting antenna;
- Figure 5 shows a front view in elevation of the transmitting antenna;
- Figure 6 schematically shows a first transmission mode the transmitting antenna;
- Figure 7 schematically shows a second transmission mode the transmitting antenna;
- Figure 8 schematically shows a third transmission mode the transmitting antenna;
- Figure 9 shows a schematic view in lateral cross-section of the receiving antenna;
- Figure 10 shows a ship mast comprising the bistatic radar in Figure 1;
- Figure 11 shows a land vehicle comprising the bistatic radar in Figure 1.

In the appended drawings, elements which are the same or similar will be indicated using the same reference numerals.

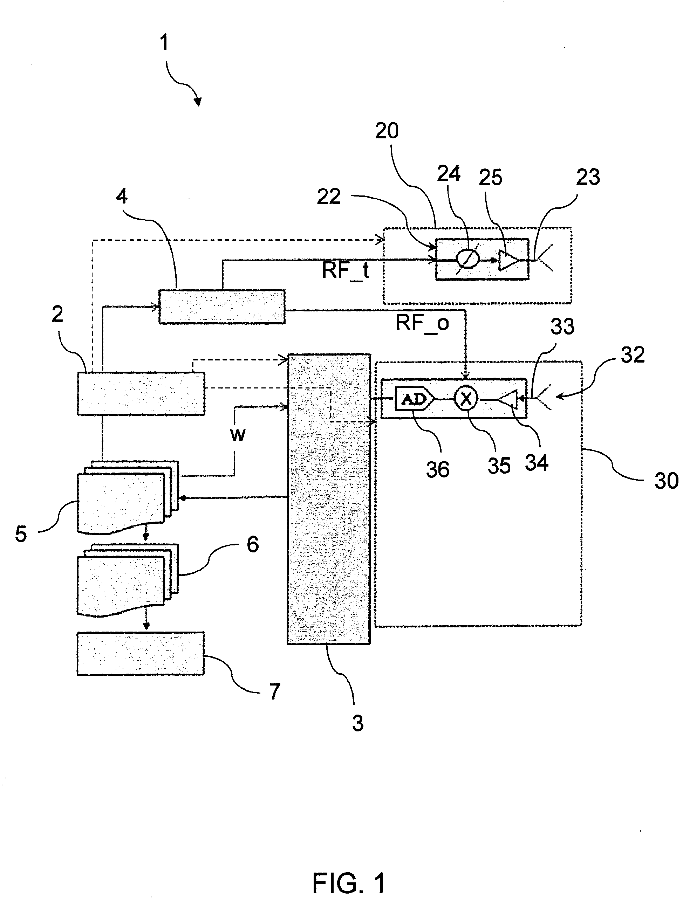

Figure 1 shows a functional block diagram of a bistatic radar 1 comprising a transmitting antenna 20 and a receiving antenna 30. In the particular example represented and without thereby introducing any limitation, the bistatic radar 1 is a radar of a military vessel. It should be noted, however, that the teachings of the present description are applicable without restriction to the particular field of use of the bistatic radar 1, in that the bistatic radar 1 which the present description relates to could be any radar utilisable for example in the telecommunications industry, in the field of civil aviation, in the field of scientific measurement instrumentation.

The bistatic radar 1 comprises an active phased array transmitting antenna 20 adapted to irradiate a radio frequency output signal 40. The active phased array transmitting antenna 20 comprises a cylindrical or conical or truncated cone array of columns 21 of active transmission modules 22. In the example shown in the drawings the array of columns 21 of active transmission modules 22 is in particular, an array having the shape of a truncated cone with a circular base in which the columns 21 of active transmission modules 22 are directed along the generatrix of the aforesaid truncated cone.

For example, the aforementioned array of columns 21 of transmission modules 22 comprises one hundred columns 21 of active transmission modules 22 and each column 21 comprises sixteen active transmission modules, so that the number of active transmission modules 22 of the transmitting antenna is for example equal to one hundred and sixty.

Preferably each of the columns 21 is a block physically independent of the others and is attached inside a support structure 27 of the transmitting antenna 20, for example of a tubular truncated-cone shape and for example made of carbon fibre or aluminium. Such support structure 27 has slots for example, (intended as through-openings in the form of slots) at each of which a respective column 21 of active transmission modules 22 is attached. According to one embodiment, the aforesaid support structure 27 is covered with a radome, not shown in the figures, superposed and in contact with the support structure 27 and which is possibly made of a material suitable to act as a bandpass filter for the portion of spectrum of frequencies of interest. For example, the radome is made of kevlar or glass fibre.

With reference to Figure 1, according to one embodiment each active transmission module 22 of the transmitting antenna 20 comprises in cascade: an input adapted to receive a modulated radio frequency signal RF_t to be transmitted, a phase-shifter 24 adapted to phase delay said modulated signal RF_t, a power amplifier 25 (for this reason the transmitting antenna is defined as an "active phased array") and a transmitting antenna element 23. The transmitting antenna element 23 is, for example, a patch antenna or a dipole antenna. The bistatic radar 1 comprises for example a signal generator 4 adapted to provide each active transmission module 22 with the radio frequency modulated signal to be transmitted RF_t.

The bistatic radar 1 further comprises a radar activity block scheduler 2 adapted to control the signal generator 4 and the transmitting antenna 20. For example, in each active transmission module 22 the phase shifter 24 is adapted to receive in input a digital control signal provided in output by the scheduler block 2 to control the phase delay introduced by the phase shifter 24 in the radio frequency modulated signal RF_t.

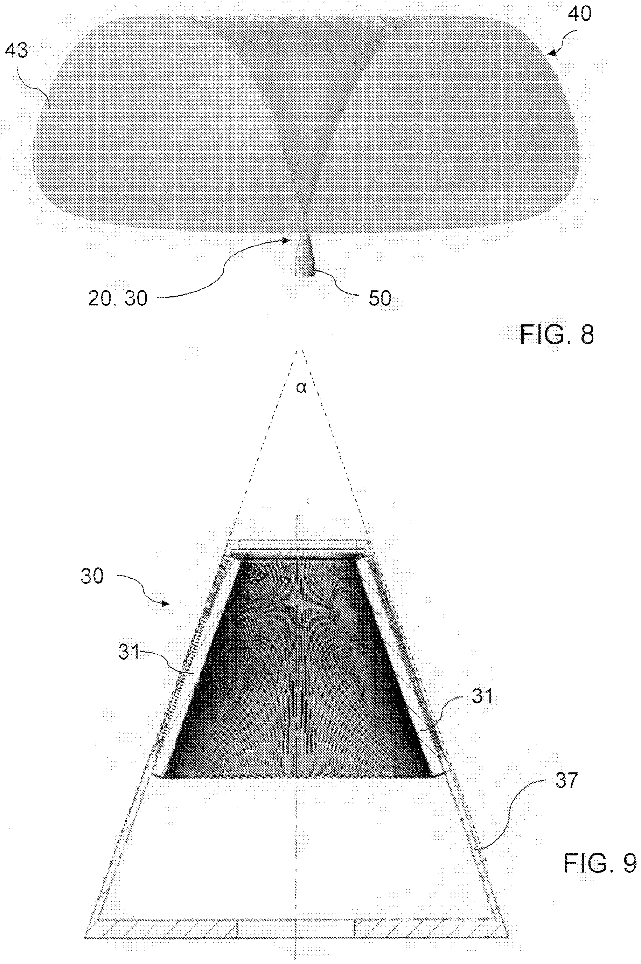

The bistatic radar 1 further comprises a receiving antenna 30 comprising a truncated-cone array of columns 31 of reception modules 32 directed along the generatrix of a truncated cone. With reference to Figure 9, according to a preferred embodiment, the aforesaid truncated cone has a solid angle of aperture α of between 10° and 60°, extremes included. For example said solid angle of aperture α is equal to, or approximately equal to, 30°.

Each reception module 32 comprises in cascade an antenna receiver element 33, an analog amplifier 34 and an analog to digital converter 36 adapted to produce digital samples in output. Preferably, the analog amplifier 34 is an LNA (Low Noise Amplifier). Each antenna receiver element 33 is, for example, a patch antenna or a dipole. The analog to digital converter is for example an eight or sixteen bit converter.

According to one embodiment, each receiver module 32 comprises upstream of the analog to digital converter 36, a low frequency conversion block 35, such as a mixer, adapted to convert the signal received into baseband or an intermediate frequency. To such purpose, each reception module 32 is adapted to receive in input a radiofrequency signal RF_o provided in output by the signal generator 4. It should be remembered that some of the components of the reception module 32 may be duplicated to allow the sampling of phase part and of the quadrature part of the signal received by the antenna element 33.

Preferably each of the columns 31 or reception modules 32 is a block physically independent of the others and is attached inside a support structure 37 of the receiving antenna 30, for example of a tubular truncated-cone shape and for example made of carbon fibre or aluminium. Such support structure 37 has slots for example, (intended as through-openings in the form of slots) at each of which a respective column 31 of reception modules 32 is attached. According to one embodiment, the aforesaid support structure 37 is covered with a radome, not shown in the-figures, superposed and in contact with the support structure 37 and which is possibly made of a material suitable to act as a bandpass filter for the portion of spectrum of frequencies of interest. For example, the radome is made of kevlar or glass fibre.

In the case in which both the support structures 27 and 37 are physically superposed (i.e. stacked one on top of the other) it is possible to provide for a single radome which covers both the transmitting antenna 20 and the receiving antenna 30.

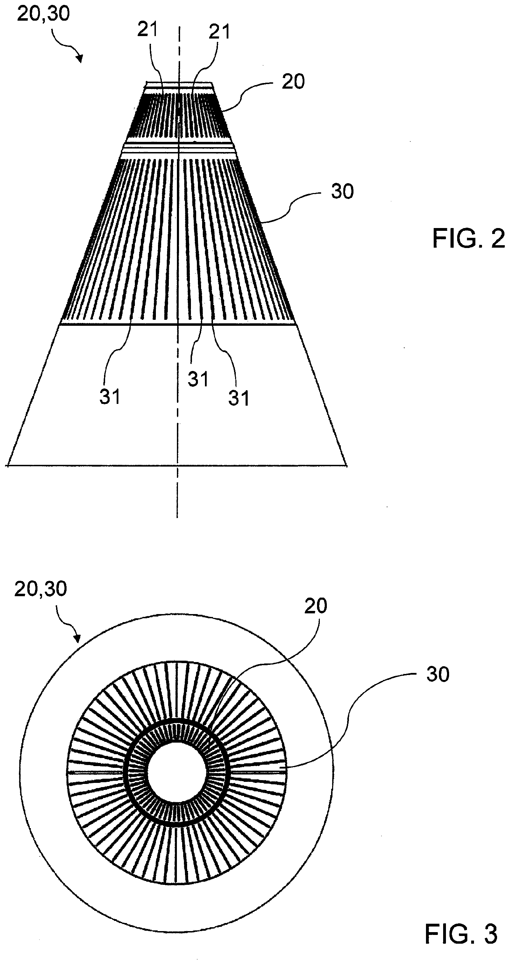

According to one embodiment, the transmitting antenna 20 and the receiving antenna 30 are two separate structures coaxially superposed. In the particular example shown in Figures 2 and 3, the transmitting antenna 20 and the receiving antenna 30 together form a continuous truncated-cone shape structure. Furthermore, in the particular, non-limiting example shown in Figures 2 and 3, the transmitting antenna 20 is superimposed to the receiving antenna 30.

According to a preferred embodiment, the number of reception modules 32 of the receiving antenna 30 is greater than the number of active transmission modules 22 of the transmitting antenna 20. For example, the receiving antenna 30 comprises two hundred columns 31, each comprising sixty-four reception modules 32. In such example the receiving antenna thus comprises twelve thousand, eight hundred reception modules 32 (while in the example described above, the transmitting antenna 20 comprises one thousand six hundred transmission modules 22, the number of reception modules 32 is therefore equal to eight times the number of transmission modules 22). Also the number of reception modules 32 in the same column 31 of the receiving antenna 30 is preferably greater than the number of transmission modules 22 in the same column 21 of the transmitting antenna 20.

According to one embodiment, the receiving antenna 30 comprises for each of the columns 31 of reception modules 32 one or more FPGA boards adapted to process the signal received by the antenna receiver elements 33 to provide digital samples in output. For example, for each column 31 of sixty-four reception modules 32, sixteen FPGA boards are provided, each of which is operatively interconnected to four respective antenna receiver elements 33. A data concentrator column may also be provided for adapted to collect the digital samples supplied in output from all the reception modules 32 belonging to the same column 31 and to concentrate said samples in one or more signals.

The bistatic radar 1 further comprises a full digital beam forming block 3 adapted to receive in input and numerically process the digital samples supplied in output by the receiving antenna 30. In particular, such block 3 comprises a digital processor which receiving weight coefficients W in input is configured and adapted to calculate different weighted linear combinations of the aforesaid digital samples supplied in output by the receiving antenna 30. According to an embodiment in which concentrator columns are provided for in the receiving antenna 30 it is possible to provide for an optic fibre connection between the concentrators columns and the full digital beam forming block 3.

According to one embodiment, the bistatic radar 1 comprises a signal processor 5 operatively connected to the scheduler 2 and to the full digital beam forming block 3 and adapted to provide the latter the weight coefficients W and to receive in input from the latter the weighted linear combinations calculated. Each linear combination corresponds to a receiving antenna beam and the weight coefficients are preferably selected, as well as to determine the pointing of the receiving antenna beam, to create reception "holes" in directions which have a high level of environmental disturbance. The number of pulses and timing in transmission are scheduled by the scheduler block 2 as a function of radar activity in progress, which is automatically updated as a function of the processing of the signal processor 5.

In addition to the signal processor 5 it is possible to provide that the bistatic radar 1 further comprises a data processor 6 operatively connected to the signal processor 5 and a command and control console 7 operatively connected to the data processor 6.

According to one embodiment, the full digital beam forming block 3 is such as to process the digital samples numerically for the digital synthesis of a plurality of simultaneous and independent reception beams.

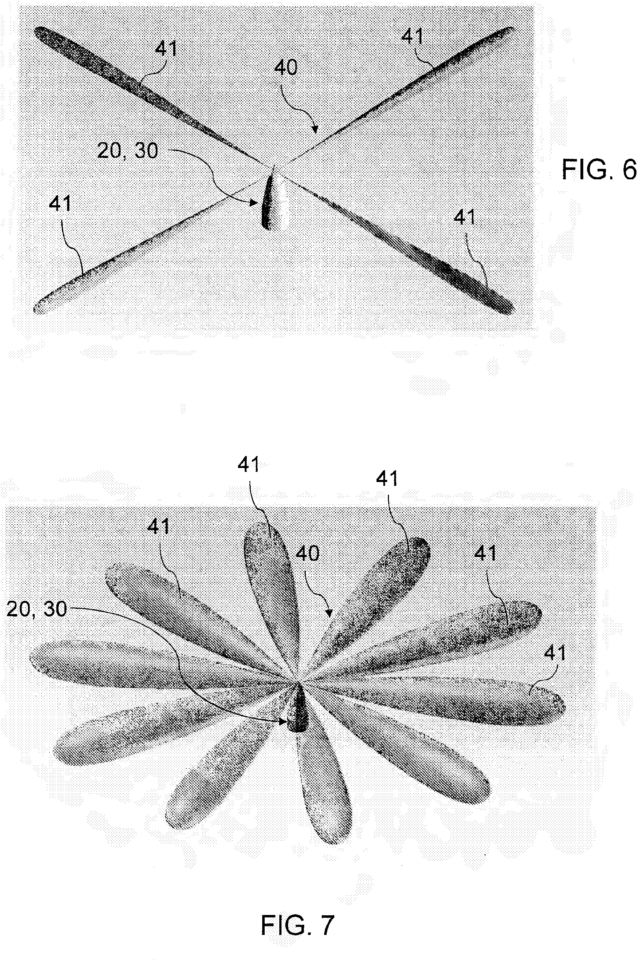

With reference to figures 6 and 7, according to one embodiment, the radar activity scheduler block 2 is adapted to control the transmitting antenna 20, the receiving antenna 30 and the full digital beam forming block 3 according to a first operating mode wherein the transmitting antenna 20 is controlled so that the radio frequency output signal 40 (i.e. irradiated signal) has N directional transmission beams 41, wherein N is an integer greater than or equal to one and in the case in which N is greater than one, said beams 41 are simultaneous, i.e. irradiated simultaneously.

The pointing direction and the aperture of each directional transmission beam 41 are controllable in elevation and/or in azimuth by the radar activity scheduler block 2. In particular, each directional transmission beam 41, for example pencil-shaped, is produced by a respective sub array of adjacent columns 21 of active transmission modules 22 selectable electronically and centred in azimuth with respect to the pointing direction of the respective directional transmission beam 41. The aforesaid sub arrays of adjacent columns 21 do not have shared columns, i.e. they are not superposed.

In the example of Figure 6, the signal 40 irradiated by the transmitting antenna 20 comprises four simultaneous directional beams 41 (therefore, N = 4), for example to perform by means of the bistatic radar 1 a surveillance or tracking of one or more long distance targets (for example up to distances of the order of 80-100 km). To obtain such irradiated signal the transmitting antenna 20 is for example divided into four sub arrays of columns 21 and each of such sub arrays is dedicated to the issuance of a respective directional beam 41. In the case in which a long-range surveillance activity is performed, the directional transmission beams 41 rotate in the azimuth plane making the sub arrays rotate electronically so as to ensure 360° monitoring. The scanning in azimuth takes place by means of a phase control of the transmission modules 22, in particular by means of the phase shifters 24.

In the example of Figure 7, the signal 40 irradiated by the transmitting antenna 20 comprises ten simultaneous directional beams 41 (therefore, N = 10), for example to perform by means of the bistatic radar 1 tracking of several targets simultaneously at medium range (for example up to distances of the order of 30-40 km).

In the aforesaid first operating mode the receiving antenna 30 and the full digital beam forming block 3 are controlled by the radar activity scheduler 2 to produce for each of said N directional transmission beams 41 a respective plurality of M simultaneous receiving beams, where M is an integer greater than one and less than or equal to the number of columns 31 of reception modules 32. Consequently the full digital beam forming block 3 is configured to simultaneously synthesize MxN receiving beams.

According to an advantageous embodiment, each plurality of M receiving beams is such as to point in the direction of a respective directional transmission beam 41 and is produced by one or more respective sub arrays of columns 31 of reception modules 32 selectable electronically and centred in azimuth with respect to the pointing direction of the respective directional transmission beam 41. This way it is advantageously possible to avoid scanning losses in the horizontal plane. The aforesaid sub arrays of columns 31 of reception modules 32 may also have shared columns 31, i.e. may be partially superposed.

It is to be noted that in the first operating mode the bistatic radar 1 is configured to perform a surveillance and tracking activity and the scheduler block 2 is configured to control the transmitting antenna 20, the receiving antenna 30 and the full digital beam forming block 3 so as to electronically scan a sector to be monitored by means of said directional transmission 41 and reception beams, wherein the azimuth scanning is performed by means of the electronic selection of said sub arrays of columns 21, 31 (both of transmission modules and reception modules) while the scan in elevation is performed by means of a phase control.

According to a further embodiment, the radar activity scheduler block 2 is adapted to control the transmitting antenna 20, the receiving antenna 30 and the full- digital beam forming block 3 according to a second operating mode, selectable alternatively to the first. In the second operating mode the transmitting antenna 20 is controlled so that the radio frequency output signal 40 has a defocused radiation diagram 43 having a hemispherical or substantially hemispherical shape for example as shown in figure 8. In the particular example shown in Figure 8, the radiation diagram has a shape with coverage in azimuth of 360° and in elevation of 70° and is definable in such regard as substantially hemispherical (Ω beam).

In the second operating mode the receiving antenna 30 is controlled by simultaneously pointing one or more pluralities of M reception beams along one or more respective directions in which the presence of a target is signalled. Advantageously, it is thus possible to perform by means of the bistatic radar 1 a tracking activity of multiple targets simultaneously over short distances (for example up to distances of 10 km). In general it is possible to provide that in the second operating mode the bistatic radar 1 be configured to perform:
- an activity of pursuing a target, or simultaneously pursuing several targets; and/or
- an activity of guiding a remote-controlled weapon, or simultaneously guiding several remote-controlled weapons; and/or
- an activity of aiming at an artillery device, or simultaneously aiming at several artillery devices.

According to one embodiment, the transition between the first operating mode and the second operating mode and vice versa is gradual, for example progressively defocusing the directional beams 41 as shown in figure 7 until a transmitted signal is obtained which has a radiation pattern of the type shown in Figure 8.

Alternatively or in addition to the second operating mode it is possible to provide for a further operating mode in which the transmitted signal has a radiation pattern with a disc profile, with coverage in azimuth of 360°, amplitude of 5°-10° and variable pointing in elevation (2n beam). In this case, reception beams which point along all directions so as to entirely cover the transmitted signal are synthesized in reception by means of the digital beam forming block.

In all the operating modes described above it is possible to store the radar echo signal in digital form and process it using the full digital beam forming block 3 at a deferred time.

This makes it possible to reduce the number of reception channels, which in the case of processing in real time should be equal to the number of the reception beams, since each channel can process sequentially several reception beams with different pointing, obtained in deferred time by the digital beam forming block 3 processing the stored radar echo. Since power transmission is not required during the deferred processing in this case a reduction of the duty cycle of the transmitted signal is also obtained. Obviously this operating mode determines an increase in the refresh time of the radar data, and may thus be applied when this parameter is not relevant to the radar operations or when it is essential to minimize the transmission time to reduce the interception of the radar.

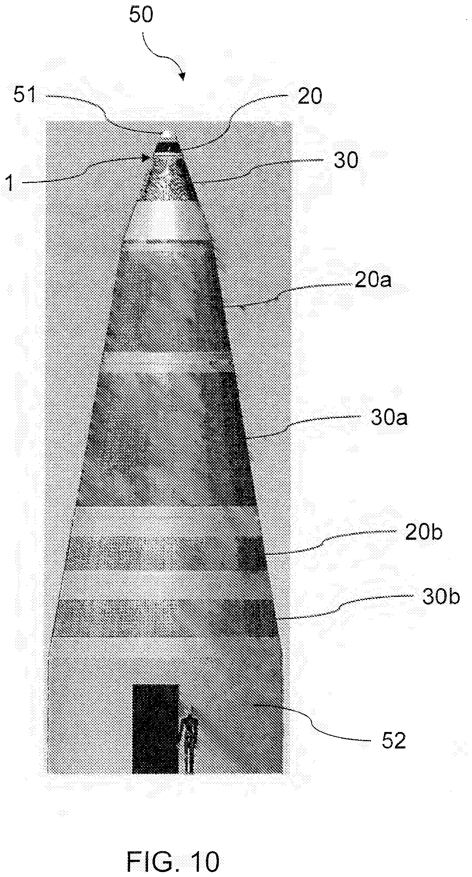

With reference to the example shown in Figure 10 it is possible to integrate one or more bistatic radars described above in a ship mast 50. The ship mast 50, or at least a portion thereof, is preferably installed on a mechanically stabilized platform.

In the example shown in Figure 10 the ship mast has an ESM (Electronic Surveillance Measure) antenna at the top. Under this the ship mast 50 comprises a transmitting antenna 20 and a receiving antenna 30 of the bistatic radar 1 described above, for example, operating at a frequency of 10 GHz.

According to one embodiment, the ship mast 50 further comprises a further truncated-cone transmitting antenna 20a similar to the transmitting antenna 20 described above and which is for example an ECM (Electronic Countermeasure) antenna operating in the 2-18 GHz band.

According to one embodiment, the ship mast 50 further comprises a further truncated-cone transmitting antenna 20b similar to the transmitting antenna 20 described above and which for example is a dual antenna adapted to carry out both the function of transmitting antenna of a long-range radar (e.g. operating at a frequency of 1.3 GHz) and the function of a transmitting antenna of an IFF (Identification Friend or Foe) system, for example, operating at a frequency of 1.06 GHz. In such embodiment, the ship mast 50 further comprises:
- a further truncated-cone receiving antenna 30a similar to the receiving antenna 30 described above and which for example is the receiving antenna of the above-mentioned long-range radar comprising the transmitting antenna 20b; and
- a further truncated-cone receiving antenna 30b similar to the receiving antenna 30 described above and which for example is the receiving antenna of the aforementioned IFF system comprising the transmitting antenna 20b.

At the base of the ship mast 50 a control room may be provided for housing the command and control console 7 of the block diagram in Figure 1, and possibly other hardware/software equipment adapted to process the signals connected with the operation of the transmitting and receiving antennas described above.

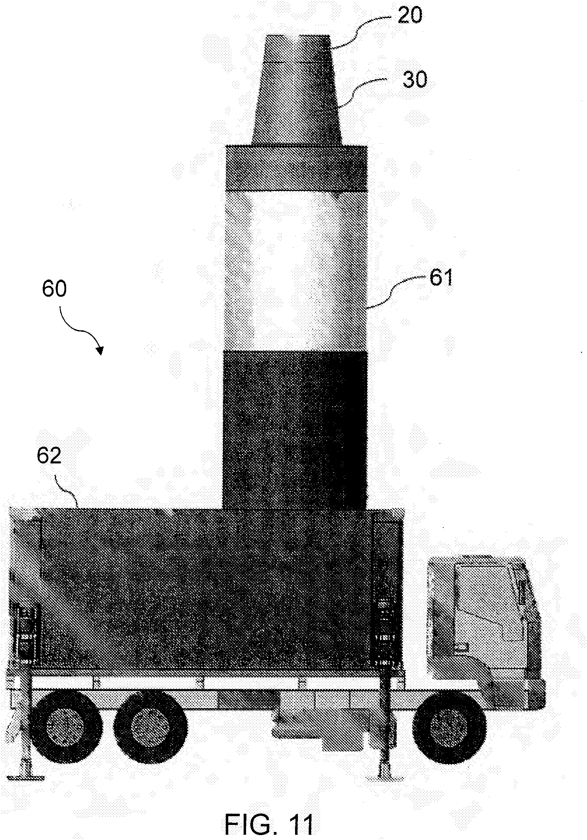

With reference to Figure 11, it is to be observed that a bistatic radar 1 of the type described above can be installed on board a land vehicle 60, for example on top of a telescopic shaft 61. In the particular example shown, the aforementioned land vehicle 60 is a truck equipped with a habitable container housing the command and control console 7 of the block diagram of Figure 1, and possibly other hardware/software equipment adapted to process the signals connected with the operation of the bistatic radar 1.

From the above description it is evident how a bistatic radar of the type described above makes it possible to achieve the aforementioned purposes with reference to the state of the prior art.

Without prejudice to the principle of the invention, the embodiments and construction details may be varied widely with respect to what has been described and illustrated purely by way of a non-limiting example, without thereby departing from the scope of the invention as defined in the appended claims.

## Claims

1. Bistatic radar (1) comprising:
- an active phased array transmitter antenna (20) adapted to irradiate a radio frequency output signal (40) and comprising a cylindrical or conical or truncated cone array of columns (21) of active transmission modules (22) ;
- a receiving antenna (30) comprising a truncated cone array of columns (31) of reception modules (32)directed along the generatrix of a truncated cone, each reception module (32) comprising in cascade an antenna receiver element (33), an analog amplifier (34) and an analog to digital converter (36) adapted to produce digital samples in output; and
- and a full digital beam forming block (3) adapted to receive in input and numerically process said digital samples.

2. Bistatic radar (1) according to claim 1, wherein the full digital beam forming block (3) is such as to process said digital samples numerically for the digital synthesis of a plurality of simultaneous and independent reception beams.

3. Bistatic radar (1) according to any one of the previous claims, comprising a radar activity scheduler block (2)adapted to control the transmitting antenna (20), the receiving antenna (30) and the full digital beam forming block (3) according to a first operating mode wherein:
- the transmitting antenna (20) is controlled so that the radio frequency output signal (40) has N directional transmission beams (41), wherein N is an integer greater than or equal to one and in the case in which N is greater than one, said beams (41) are simultaneous, the pointing direction and the aperture of each beam (41) being controllable in elevation and/or in azimuth by the scheduler block (2), wherein each directional transmission beam (41) is produced by a respective sub array of adjacent columns (21) of transmission modules (22) electronically selectable and centred in azimuth in relation to the pointing direction of the respective directional transmission beam (41); and
- the receiving antenna (30) and the full digital beam forming block (3) are controlled to produce for each of said N directional transmission beams (41)a respective plurality of M simultaneous reception beams, wherein M is an integer greater than one and less than or equal to the number of columns (31) of reception modules (32).

4. Bistatic radar (1) according to claim 3, wherein each plurality of reception beams M:
- is such as to point in the direction of the respective directional transmission beam (41);
- is produced by one or more respective sub arrays of columns (31) of reception modules (32) electronically selectable and centred in azimuth in relation to the pointing direction of the respective directional transmission beam (41).

5. Bistatic radar (1) according to claims 3 or 4, wherein the radar activity scheduler block (2) is also adapted to control the transmitting antenna (20), the receiving antenna (30) and the full digital beam forming block (3) according to a second operating mode, selectable alternatively to the first one, wherein:
- the transmitting antenna (20) is controlled so that the radio frequency output signal (40) has a defocused radiation diagram (43) having a hemispherical or substantially hemispherical shape; and
- the receiving antenna (30) is controlled simultaneously by pointing one or more pluralities of M reception beams along one or more respective directions in which the presence of a target is signalled.

6. Bistatic radar (1) according to claim 3, wherein in the first operating mode the radar (1) is configured to perform a surveillance and tracking activity wherein the scheduler block (2) is configured to control the transmitting antenna (20), the receiving antenna (30) and the full digital beam forming block (3) so as to electronically scan a sector to be monitored by means of said directional transmission and reception beams, wherein the azimuth scanning is performed by means of the electronic selection of said sub arrays of columns and the scan in elevation is performed by means of a phase control.

7. Bistatic radar (1) according to claim 5, wherein in the second operating mode the bistatic radar (1) is configured to perform:
- an activity of pursuing a target, or simultaneously pursuing several targets; and/or
- an activity of guiding a remote-controlled weapon, or simultaneously guiding several remote-controlled weapons; and/or
- an activity of aiming an artillery device , or simultaneously aiming at several artillery devices.

8. Bistatic radar (1) according to any one of the claims from 3 to 7, wherein each transmission module (22) comprises in cascade: an input adapted to receive a modulated radio frequency signal (RF_t) to be transmitted, a phase-shifter (24) adapted to phase delay said modulated signal (RF_t) a power amplifier (25) and an antenna element (23), wherein the phase-shifter (24) is adapted to receive in input a digital control signal provided in output by said scheduler block (2) to control the phase delay introduced in said radio frequency modulated signal (RF_t).

9. Bistatic radar (1) according to any one of the previous claims, wherein the transmitting antenna (20) has a truncated cone shape and wherein the columns (21) of transmission modules (22) are directed along the generatrix of said truncated cone.

10. Bistatic radar (1) according to claim 9, wherein the transmitting antenna (20) and the receiving antenna (30) are coaxially superposed.

11. Bistatic radar (1) according to claim 10, wherein the transmitting antenna (20) and the receiving antenna (30) together form a truncated-cone shape structure.

12. Bistatic radar (1) according to claim 1, wherein said truncated cone has a solid angle of aperture (α) comprised between 10° to 60° extremes included.

13. Bistatic radar (1) according to claim 12, wherein said truncated cone has a solid angle of aperture (α) equal to, or approximately equal to, 30°.

14. Bistatic radar (1) according to any one of the previous claims, wherein the number of reception modules (32) is greater than the number of transmission modules (22) .

15. Ship mast (50) comprising at least one bistatic radar (1) according to any of the previous claims.

16. Military ship comprising at least one bistatic radar (1) according to any one of the claims from 1 to 14, or a ship mast (50) according to claim 15.

17. Land vehicle (60) comprising at least one bistatic radar (1) according to any one of the claims from 1 to 14.

## Patentansprüche

1. Bistatische Radarvorrichtung (1), die umfasst:
- eine aktive phasengesteuerte Gruppen-Sendeantenne (20), die dazu ausgelegt ist, ein Radiofrequenzausgangssignal (40) abzustrahlen, und die eine zylindrische oder konische oder kegelstumpfförmige Anordnung von Spalten (21) von aktiven Übertragungsmodulen (22) umfasst;
- eine Empfangsantenne (30), die eine Kegelstumpfanordnung von Spalten (31) von Empfangsmodulen (32), die entlang der Mantellinie eines Kegelstumpfes gerichtet sind, umfasst, wobei jedes Empfangsmodul (32) in Kaskade ein Antennenempfängerelement (33), einen analogen Verstärker (34) und einen Analog-Digital-Wandler (36), der dazu ausgelegt ist, digitale Abtastwerte in der Ausgabe zu erzeugen, umfasst; und
- einen volldigitalen Strahlformungsblock (3), der dazu ausgelegt ist, die digitalen Abtastwerte als Eingabe zu empfangen und numerisch zu verarbeiten.

2. Bistatische Radarvorrichtung (1) gemäß Anspruch 1, wobei der volldigitale Strahlformungsblock (3) derart ist, dass die digitalen Abtastwerte für die digitale Synthese einer Mehrzahl von gleichzeitigen und unabhängigen Empfangsstrahlen numerisch verarbeitet werden.

3. Bistatische Radarvorrichtung (1) gemäß einem der vorangegangenen Ansprüche, die einen Radar-Aktivitäts-Ablaufsteuerungsblock (2) umfasst, der ausgelegt ist zum Steuern der Sendeantenne (20), der Empfangsantenne (30) und des volldigitalen Strahlformungsblock (3) gemäß einem ersten Betriebsmodus, wobei:
- die Sendeantenne (20) derart gesteuert wird, dass das Radiofrequenzausgangssignal (40) N Richtübertragungsstrahlen (41) aufweist, wobei es sich bei N um eine ganze Zahl größer oder gleich Eins handelt, und in dem Fall, in dem N größer als Eins ist, die Strahlen (41) gleichzeitig sind, wobei die Ausrichtungsrichtung und die Öffnung jedes Strahls (41) durch den Ablaufsteuerungsblock (2) in Höhe und/oder Azimut gesteuert werden kann, wobei jeder Richtübertragungsstrahl (41) erzeugt wird durch eine jeweilige Unteranordnung von benachbarten Spalten (21) von Übertragungsmodulen (22), die elektronisch auswählbar und in Azimut in Bezug auf die Ausrichtungsrichtung des jeweiligen Richtübertragungsstrahls (41) zentriert sind; und
- die Empfangsantenne (30) und der volldigitale Strahlformungsblock (3) gesteuert werden, um für jeden der N Richtübertragungsstrahlen (41) eine jeweilige Mehrzahl von M gleichzeitigen Empfangsstrahlen zu erzeugen, wobei es sich bei M um eine ganze Zahl größer als Eins und kleiner oder gleich der Anzahl von Spalten (31) von Empfangsmodulen (32) handelt.

4. Bistatische Radarvorrichtung (1) gemäß Anspruch 3, wobei jede Mehrzahl von Empfangsstrahlen M:
- derart ist, dass sie in Richtung der jeweiligen Richtübertragungsstrahlen (41) ausgerichtet ist;
- erzeugt wird durch wenigstens eine jeweilige Unteranordnung von benachbarten Spalten (31) von Übertragungsmodulen (32), die elektronisch auswählbar und in Azimut in Bezug auf die Ausrichtungsrichtung des jeweiligen Richtübertragungsstrahls (41) zentriert sind.

5. Bistatische Radarvorrichtung (1) gemäß Anspruch 3 oder 4, wobei der Radar-Aktivitäts-Ablaufsteuerungsblock (2) darüber hinaus volldigitalen Strahlformungsblocks ausgelegt ist zum Steuern der Sendeantenne (20), der Empfangsantenne (30) und des volldigitalen Strahlformungsblocks (3) gemäß einem zweiten Betriebsmodus, der alternativ zu dem ersten Betriebsmodus ausgewählt werden kann, wobei:
- die Sendeantenne (20) derart gesteuert wird, dass das Radiofrequenzausgangssignal (40) ein defokussiertes Strahlungsdiagramm (43) mit einer halbkugelförmigen oder im Wesentlichen halbkugelförmigen Form aufweist; und
- die Empfangsantenne (30) gleichzeitig gesteuert wird, indem eine oder mehrere Mehrzahlen von M Empfangsstrahlen entlang einer oder mehrerer jeweiliger Richtungen, in denen das Vorhandensein eines Ziels signalisiert wird, ausgerichtet werden.

6. Bistatische Radarvorrichtung (1) gemäß Anspruch 3, wobei die Radarvorrichtung (1) in dem ersten Betriebsmodus dazu konfiguriert ist, eine Überwachungs- und Verfolgungsaktivität durchzuführen, wobei der Ablaufsteuerungsblock (2) dazu konfiguriert ist, die Sendeantenne (20), die Empfangsantenne (30) und den volldigitalen Strahlformungsblock (3) derart zu steuern, dass ein zu überwachender Sektor mit Hilfe der Richtübertragungs- und Empfangsstrahlen elektronisch abgetastet wird, wobei die Azimutabtastung mit Hilfe der elektronischen Auswahl der Unteranordnungen von Spalten durchgeführt wird, und die Höhenabtastung mit Hilfe einer Phasensteuerung durchgeführt wird.

7. Bistatische Radarvorrichtung (1) gemäß Anspruch 5, wobei die bistatische Radarvorrichtung (1) in dem zweiten Betriebsmodus dazu konfiguriert ist, die folgenden Aktivitäten durchzuführen:
- eine Aktivität, ein Ziel zu verfolgen oder gleichzeitig mehrere Ziele zu verfolgen; und/oder
- eine Aktivität, eine ferngesteuerte Waffe zu führen oder gleichzeitig mehrere ferngesteuerte Waffen zu führen; und/oder
- eine Aktivität, auf ein Artilleriegerät zu zielen oder gleichzeitig auf mehrere Artilleriegeräte zu zielen.

8. Bistatische Radarvorrichtung (1) gemäß einem der Ansprüche 3 bis 7, wobei jedes Übertragungsmodul (22) in Kaskade umfasst: einen Eingang, der zum Empfangen eines zu sendenden modulierten Radiofrequenzsignals (RF_t) ausgelegt ist, einen Phasenschieber (24), der dazu ausgelegt ist, eine Phasenverzögerung an dem modulierten Signal (RF_t) zu bewirken, einen Leistungsverstärker (25) und ein Antennenelement (23), wobei der Phasenschieber (24) dazu ausgelegt ist, am Eingang ein digitales Steuersignal zu empfangen, das von dem Ablaufsteuerblock (2) ausgegeben wurde, um die in dem modulierten Radiofrequenzsignal (RF_t) eingeführte Phasenverzögerung zu steuern.

9. Bistatische Radarvorrichtung (1) gemäß einem der vorangegangenen Ansprüche, wobei die Sendeantenne (20) eine Kegelstumpfform aufweist, und wobei die Spalten (21) von Übertragungsmodulen (22) entlang der Mantellinie des Kegelstumpfes gerichtet sind.

10. Bistatische Radarvorrichtung (1) gemäß Anspruch 9, wobei die Sendeantenne (20) und die Empfangsantenne (30) koaxial überlagert sind.

11. Bistatische Radarvorrichtung (1) gemäß Anspruch 10, wobei die Sendeantenne (20) und die Empfangsantenne (30) zusammen eine Kegelstumpfformstruktur bilden.

12. Bistatische Radarvorrichtung (1) gemäß Anspruch 1, wobei der Kegelstumpf einen Öffnungsraumwinkel (α) aufweist, der zwischen einschließlich 10° und einschließlich 60° liegt.

13. Bistatische Radarvorrichtung (1) gemäß Anspruch 12, wobei der Kegelstumpf einen Öffnungsraumwinkel (α) aufweist, der gleich oder ungefähr gleich 30° ist.

14. Bistatische Radarvorrichtung (1) gemäß einem der vorangegangenen Ansprüche, wobei die Anzahl von Empfangsmodulen (32) größer als die Anzahl von Übertragungsmodulen (22) ist.

15. Schiffsmast (50), der wenigstens eine bistatische Radarvorrichtung (1) gemäß einem der vorangegangenen Ansprüche umfasst.

16. Militärschiff, das wenigstens eine bistatische Radarvorrichtung (1) gemäß einem der Ansprüche 1 bis 14 oder einen Schiffsmast (50) gemäß Anspruch 15 umfasst.

17. Landfahrzeug (60), das wenigstens eine bistatische Radarvorrichtung (1) gemäß einem der Ansprüche 1 bis 14 umfasst.

## Revendications

1. Radar bistatique (1) comprenant :
- une antenne émettrice active à réseau à commande de phase (20) conçue pour émettre un signal de sortie radiofréquence (40) et comprenant un réseau de colonnes cylindrique ou conique ou en cône tronqué (21) de modules de transmission actifs (22) ;
- une antenne réceptrice (30) comprenant un réseau de colonnes en cône tronqué (31) de modules de réception (32) orientés suivant la génératrice d'un cône tronqué, chaque module de réception (32) comprenant, en cascade, un élément récepteur d'antenne (33), un amplificateur analogique (34) et un convertisseur analogique-numérique (36) conçu pour produire en sortie des échantillons numériques ; et
- un bloc de formation de faisceaux tout numérique (3) conçu pour recevoir en entrée et traiter numériquement lesdits échantillons numériques.

2. Radar bistatique (1) selon la revendication 1, dans lequel le bloc de formation de faisceaux tout numérique (3) est tel qu'il traite lesdits échantillons numériques numériquement pour la synthèse numérique d'une pluralité de faisceaux de réception simultanés et indépendants.

3. Radar bistatique (1) selon l'une quelconque des revendications précédentes, comprenant un bloc planificateur d'activité radar (2) conçu pour commander l'antenne émettrice (20), l'antenne réceptrice (30) et le bloc de formation de faisceaux tout numérique (3) selon un premier mode de fonctionnement dans lequel :
- l'antenne émettrice (20) est commandée de telle sorte que le signal de sortie radiofréquence (40) possède N faisceaux d'émission directionnels (41), dans lequel N est un entier supérieur ou égal à un et dans le cas où N est supérieur à un, lesdits faisceaux (41) sont simultanés, la direction de pointage et l'ouverture de chaque faisceau (41) pouvant être commandées en élévation et/ou en azimut par le bloc planificateur (2), dans lequel chaque faisceau d'émission directionnel (41) est produit par un sous-réseau respectif de colonnes adjacentes (21) de modules d'émission (22) pouvant être sélectionné électroniquement et centré en azimut par rapport à la direction de pointage du faisceau d'émission directionnel (41) respectif ; et
- l'antenne réceptrice (30) et le bloc de formation de faisceaux tout numérique (3) sont commandés de manière à produire pour chacun desdits N faisceaux d'émission directionnels (41) une pluralité respective de M faisceaux de réception simultanés, dans lequel M est un entier supérieur à un et inférieur ou égal au nombre de colonnes (31) de modules de réception (32).

4. Radar bistatique (1) selon la revendication 3, dans lequel chaque pluralité de faisceaux de réception M :
- est telle qu'elle pointe dans la direction du faisceau d'émission directionnel (41) respectif ;
- est produite par un ou plusieurs sous-réseaux de colonnes (31) respectifs de modules de réception (32) pouvant être sélectionnés électroniquement et centrés en azimut par rapport à la direction de pointage du faisceau d'émission directionnel (41) respectif.

5. Radar bistatique (1) selon les revendications 3 ou 4, dans lequel le bloc planificateur d'activité radar (2) est également conçu pour commander l'antenne émettrice (20), l'antenne réceptrice (30) et le bloc de formation de faisceaux tout numérique (3) selon un second mode de fonctionnement, pouvant être sélectionné alternativement au premier, dans lequel :
- l'antenne émettrice (20) est commandée de telle sorte que le signal de sortie radiofréquence (40) possède un diagramme de rayonnement défocalisé (43) ayant une forme hémisphérique ou sensiblement hémisphérique ; et
- l'antenne réceptrice (30) est commandée simultanément par pointage d'une ou plusieurs pluralités de M faisceaux de réception suivant une ou plusieurs directions respectives dans lesquelles la présence d'une cible est signalée.

6. Radar bistatique (1) selon la revendication 3, dans lequel dans le premier mode de fonctionnement, le radar (1) est configuré pour effectuer une activité de surveillance et de suivi, dans lequel le bloc planificateur (2) est configuré pour commander l'antenne émettrice (20), l'antenne réceptrice (30) et le bloc de formation de faisceaux tout numérique (3) de manière à balayer électroniquement un secteur à surveiller au moyen desdits faisceaux directionnels d'émission et de réception, dans lequel le balayage en azimut est effectué au moyen de la sélection électronique desdits sous-réseaux de colonnes et le balayage en élévation est effectué au moyen d'une commande de phase.

7. Radar bistatique (1) selon la revendication 5, dans lequel dans le second mode de fonctionnement, le radar bistatique (1) est configuré pour effectuer :
- une activité consistant à poursuivre une cible ou à poursuivre simultanément plusieurs cibles ; et/ou
- une activité consistant à guider une arme télécommandée ou à guider simultanément plusieurs armes télécommandées ; et/ou
- une activité consistant à viser un dispositif d'artillerie ou à viser simultanément plusieurs dispositifs d'artillerie.

8. Radar bistatique (1) selon l'une quelconque des revendications de 3 à 7, dans lequel chaque module d'émission (22) comprend, en cascade : une entrée conçue pour recevoir un signal radiofréquence modulé (RF_t) à émettre, un déphaseur (24) conçu pour retarder la phase dudit signal modulé (RF_t), un amplificateur de puissance (25) et un élément d'antenne (23), dans lequel le déphaseur (24) est conçu pour recevoir en entrée un signal de commande numérique fourni en sortie par ledit bloc planificateur (2) pour commander le retard de phase introduit dans ledit signal radiofréquence modulé (RF_t).

9. Radar bistatique (1) selon l'une quelconque des revendications précédentes, dans lequel l'antenne émettrice (20) a une forme de cône tronqué et dans lequel les colonnes (21) de modules d'émission (22) sont orientées suivant la génératrice dudit cône tronqué.

10. Radar bistatique (1) selon la revendication 9, dans lequel l'antenne émettrice (20) et l'antenne réceptrice (30) sont superposées de manière coaxiale.

11. Radar bistatique (1) selon la revendication 10, dans lequel l'antenne émettrice (20) et l'antenne réceptrice (30) forment ensemble une structure en forme de cône tronqué.

12. Radar bistatique (1) selon la revendication 1, dans lequel ledit cône tronqué a un angle solide d'ouverture (α) compris entre 10° et 60°, extrêmes inclus.

13. Radar bistatique (1) selon la revendication 12, dans lequel ledit cône tronqué a un angle solide d'ouverture (α) égal à, ou à peu près égal à, 30°.

14. Radar bistatique (1) selon l'une quelconque des revendications précédentes, dans lequel le nombre de modules de réception (32) est supérieur au nombre de modules d'émission (22).

15. Mât de navire (50) comprenant au moins un radar bistatique (1) selon l'une quelconque des revendications précédentes.

16. Navire militaire comprenant au moins un radar bistatique (1) selon l'une quelconque des revendications 1 à 14 ou un mât de navire (50) selon la revendication 15.

17. Véhicule terrestre (60) comprenant au moins un radar bistatique (1) selon l'une quelconque des revendications 1 à 14.
